# EUROPÄISCHE PATENTANMELDUNG

(11) **EP 0 534 241 A2**
(43) Veröffentlichungstag der Anmeldung: **31.03.1993**
(21) Anmeldenummer: 92115517.2
(22) Anmeldetag: 10.09.1992
(51) Int. Cl.: H04Q 11/04, H04M 3/24, H04M 11/06

(54) **Test-und Simulationsverfahren zur ISDN-Zwischenamtssignalisierung**

(30) Priorität: 27.09.1991 DE 4132327
(71) Anmelder: SIEMENS AKTIENGESELLSCHAFT, D-80333 München (DE)
(72) Erfinder: Joos, Ulrike, Dipl. Ing., W-8000 München 5 (DE); Vogel, Christoph, Dipl. Ing., W-8312 Dingolfing (DE)

(57) **Zusammenfassung**

Vor Einbindung eines Vermittlungssystemsin ein ISDN-Netz ist dasselbe generell einem umfangreichen Test- und Simulationsprozeß bezüglich der Zwischenamtssignalisierung zu unterziehen. Das erfindungsgemäße Verfahren realisiert einen derartigen Test- und Simulationsablauf unter Einbeziehung der in der CCITT-Empfehlung Q767, Blaubuch, definierten Protokollelemente. Das Test- und Simulationsverfahren ist in einer zentralen Koordinierungsprozedur auf einem bereits vorhandenen Test- und Simulationssystem erstellt. Darüberhinaus werden bewußt verfälschte Signalisierungsprotokolle auf das Vermittlungssystem gegeben, um dessen Reaktion auszuwerten und somit bereits vor Inbetriebnahme des Vermittlungssystems eventuelle Schwachpunkte bezüglich der Signalisierungsprotokolle zu beseitigen.

## Beschreibung

Insbesondere in früheren Jahren hat fast jeder Hersteller von Vermittlungssystemen für Kommunikationszwecke bei der Konzeption und Entwicklung seiner Systeme eine eigene Philosophie verfolgt; demzufolge existiert eine Vielzahl von herstellerspezifischen Schnittstellenstandards, Datenformaten etc. Damit treten aber in der Praxis immer dort Probleme auf, wo Vermittlungssysteme unterschiedlicher Hersteller zusammengeschaltet werden müssen. Diese Probleme behandeln internationale Normierungsgremien, wie z. B. die CCITT, in Form der Erstellung normierter Standards für den internationalen Kommunikationsverkehr. Da sich die jeweiligen nationalen Postverwaltungen im nationalen Kommunikationsverkehr nicht uneingeschränkt an die von CCITT aufgestellten Normvorgaben halten, gibt es weiterhin Anpasssungsprobleme, wenn Vermittlungssysteme mehrerer Hersteller zusammengeschaltet werden müssen. Besonders kritisch ist dabei der Signalisierungsverkehr zwischen den Systemen.

Heute existiert eine Vielzahl von Signalisierungsverfahren mit unterschiedlichsten Datenformaten. Bei der Konzeption von Vermittlungssystemen können aber nicht alle möglichen Signalisierungsvarianten und Schnittstellenausprägungen mitberücksichtigt werden, so daß auch das Einbinden eines nach CCITT-Vorgaben entwickelten Vermittlungssystems in ein aus Vermittlungssystemen fremder Hersteller bestehendes Netz zu Schwierigkeiten führt. So kann im Extremfall ein von einem Vermittlungssystem eines fremden Herstellers ausgesandtes, nicht nach CCITT genormtes Signalisierungsformat einen Totalabsturz eines nach CCITT konzipierten Vermittlungssystems nach sich ziehen. Dies ist im Hinblick auf eine entsprechende CCITT-Forderung, die eine Totalabsturzzeit von max. 2 Stunden in 20 Jahren vorgibt, unter allen Umständen zu vermeiden. Aus diesem Grunde sind die Hersteller dazu übergegangen, vor Einbettung der Vermittlungssysteme in bestehende Netze in einer Simulations- und Testphase ihre Vermittlungssysteme, insbesondere bezüglich fehlerhafter Formate der Signalisierungen anderer Ämter, standfest zu machen.

Als besonders leistungsfähig hat sich dabei ein Test- und Simulationssystem (ITS-System, Traffic Simulator) erwiesen, das aus der Druckschrift der Firma Siemens 'Verkehrssimulator für alle öffentlichen und privaten Vermittlungssysteme ITS', Bestell-Nr. A30930-N2910-P5-3-29, bekannt ist. Dabei handelt es sich um ein Test- und Simulationssystem für mehrere Signalisierungsverfahren. Das Test- und Simulationssystem besteht aus einem Personal Computer sowie mehreren sogenannten Communication Groups. Die Bedienung des Systems erfolgt über einen Personal Computer. Das Test- und Simulationssystem wird an das Vermittlungssystem angeschaltet und simuliert ein angeschlossenes Amt bezüglich der Signalisierungsformate. So können unterschiedliche Signalisierungsabläufe simuliert werden. Möglich ist dabei die Simulation einer großen Anzahl von Signalisierungsverfahren, wie z.B. IKZ, R2, Signalisierung Nr. 5 etc. Weiterhin können ISDN-Teilnehmerendgeräte (Basic Access), ISDN-Nebenstellenanlagen (Primary Access), andere ISDN-Vermittlungsstellen (Signalisierung Nr. 7) sowie analoge Teilnehmerendgeräte (Impulswahl, MFV) simuliert werden. Problematisch dabei ist jedoch, daß bisher nur für den normalen Verbindungsauf- und abbau ein Testprogramm mit den entsprechenden Prozeduren geliefert wird. Dies bedeutet, daß nur die wesentlichsten Merkmale eines Signalisierungsformats getestet und überprüft werden können, während auf eine Simulation von fehlerhaften bzw. modifizierten Protokollen verzichtet wird.

Ein umfangreicher und umfassender Test- und Simulationsablauf, der der Komplexität von Vermittlungssystemen, insbesondere im Hinblick auf ihre Verwendung im ISDN-Netz gerecht wird, ist somit nicht möglich. Gerade im ISDN kommt der Signalisierung besondere Bedeutung zu, da hier unterschiedliche Dienste (Telefonverkehr, Fax, Bildübertragung etc.) in einem System bzw. einem einzigen Netz durchgeschaltet werden, was grundlegende Stabilitätsprobleme im gesamten Netz aufwirft.

Der Erfindung liegt die Aufgabe zugrunde, ein Vermittlungssystem vor Einbindung in das ISDN-Netz praxisgerecht auf die Fähigkeit hin zu untersuchen, Zwischenamtssignalisierungsprotokolle auszusenden, zu empfangen und zu verarbeiten, um damit Schwachpunkte des Vermittlungssystems bezüglich der Signalisierungsformate bereits vor Inbetriebnahme im Netz zu beseitigen.

Diese Aufgabe wird ausgehend vom Oberbegriff des Patentanspruchs 1 erfindungsgemäß durch dessen kennzeichnende Merkmale gelöst.

Wesentlich für die Erfindung ist die Bereitstellung der Test- und Simulatonsprozeduren im bereits vorhandenen Test- und Simulationssystem unter Benutzung der dort vorhandenen Support Software. Somit wird der Aufwand zur Erstellung jener Prozeduren minimiert. Die vorhandenen Adapter zum Anschluß an das Vermittlungssystem werden ebenfalls mitbenutzt. Weiterhin basieren die für das Meldungs/Quittungsspiel ausgesandten/empfangenen Protokollelemente auf jenen, die von CCITT festgelegt und definiert wurden.

Ein derart durchgeführter Test- und Simulationsablauf hat insbesondere den Vorteil, daß ein gesamtes Vermittlungssystem vor Inbetriebnahme im Feld in Bezug auf seine Signalisierungsformate hin überprüft und getestet werden kann. Dies ermöglicht eine systemgerechte Einbindung in bereits bestehende Netze.

Vorteilhafte Weiterbildungen der Erfindung sind in den Unteransprüchen angegeben.

Die Erfindung wird im folgenden anhand eines figürlich dargestellten Ausführungsbeispiels näher erläutert.

Einleitend sei nochmals das Meldungs- und Quittungsspiel, basierend auf einem Signalisierungsprotokoll zur Zwischenamtssignalisierung eines typischen Verbindungsaufbaus zwischen einem A-Teilnehmer und einem B-Teilnehmer erläutert:
Beim Ereignis 'A-Teilnehmer hebt ab' wird ein Protokollelement IAM zum B-Teilnehmer durchgeschaltet. Im Protokollelement IAM sind die Adressen von A-Teilnehmer/B-Teilnehmer sowie Informationen bezüglich des Verbindungsaufbaus abgelegt. Anschließend gibt der B-Teilnehmer in einem weiteren Protokollelement ACM eine Quittungsinformation an den A-Teilnehmer zurück. Hierin sind alle möglichen Zustände des B-Teilnehmers (beispielsweise Belegtzustände etc.) enthalten. Ferner enthält das Protokollelement ACM eine Nachricht, ob der Verbindungsaufbau erfolgreich war. Weiterhin gibt der B-Teilnehmer ein Protokollelement ANM zum A-Teilnehmer zurück. Hierin sind beispielsweise Informationen darüber enthalten, ob der B-Teilnehmer abgehoben hat. Am Ende des Gespräches erfolgt eine vom auflegenden Teilnehmer ausgehende Meldung REL zum Partner-Teilnehmer, woraufhin dieser eine Quittungsinformation RLC zurücksendet.

Die jeweiligen Protokollelemente sind in der CCITT-Empfehlung Q767, Blaubuch, spezifiziert und definiert. Hier ist detailliert festgelegt, wie der Austausch der Protokollelemente beim Verbindungsaufbau/-abbau zwischen zwei Teilnehmern erfolgt. Die Erfindung basiert auf den dort spezifizierten Protokollelementen. Da in der Praxis die jeweiligen Teilnehmerendgeräte, die Verbindungsleitungen, das Koppelfeld, etc., eine Vielzahl von Zuständen einnehmen können, muß diesem Umstand durch Austausch entsprechender Protokollelemente Rechnung getragen werden: Beispielsweise kann der B-Teilnehmer belegt sein oder die Verbindungsleitung zwischen B-Teilnehmerendgerät und Vermittlungsstelle überlastet/unterbrochen sein.

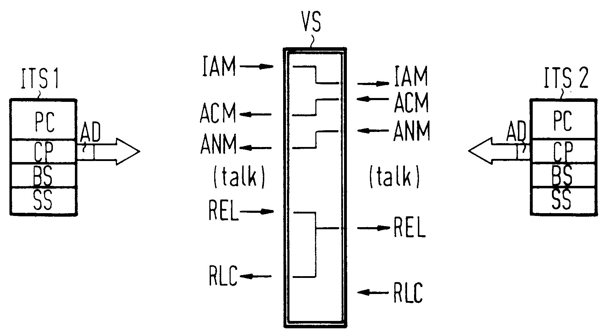

Zur Erstellung der Test- und Simulationsprozeduren wird das Test- und Simulationssystem ITS als Basis verwendet. Dazu werden die Support Software, also Editor-, Compiler-, Binderprogramme, etc., die im Test- und Simulationssystem ITS generell bereitgestellt sind, mitverwendet. Die Anschaltung des Test- und Simulationssystems ITS an das Vermittlungssystem erfolgt wie in der FIGUR dargestellt.

Die bei CCITT spezifizierten Protokollelemente sind als Prozeduren im Speicher des Test- und Simulationssystems ITS abgelegt. Auf diese Prozeduren greift eine Koordinierungsprozedur CP zu. Sie simuliert alle in der Praxis systemkritischen Fälle eines Vermittlungssystems. Im Falle eines einfachen Verbindungsaufbaus bedeutet dies, daß das Meldungs-/Quittungsspiel derart erfolgt wie eingangs für A-Teilnehmer/B-Teilnehmer beschrieben. Die FIGUR zeigt, wie ein solcher Verbindungsaufbau unter Zuhilfenahme des Test- und Simulationssystems ITS simuliert wird. Zu diesem Zweck werden zwei Test- und Simulationssysteme ITS1, ITS2 an das Vermittlungssystem angeschlossen. Das Test- und Simulationssystem ITS1 soll dabei alle Funktionen eines A-Teilnehmers simulieren, während das Test- und Simulationssystem ITS2 alle Funktionen des B-Teilnehmers durchführt.

Zunächst wird vom einen Test- und Simulationssystem ITS1 das Protokollelement IAM zum anderen Test- und Simulationssystem ITS2 abgesendet. Der erfolgreiche Empfang dieses Protokollelementes IAM wird vom Test- und Simulationssystem ITS2 durch Absenden der Protokollelemente ACM, ANM quittiert. Nach erfolgreichem Empfang dieser Protokollelemente ACM, ANM ist die Verbindung aufgebaut und ein mögliches Gespräch zwischen A-Teilnehmer/B-Teilnehmer kann beginnen. Das Ende des Gesprächs wird üblicherweise durch Auflegen das Hörers eines Teilnehmers durchgeführt. Im vorliegenden Fall soll dies beispielsweise der A-Teilnehmer sein. Dies bedeutet, daß die entsprechenden Protokollelemente vom einen Test- und Simulationssystem ITS1 in Richtung des anderen Test- und Simulationssystem ITS2 gesendet werden müssen. Das vom einen Test- und Simulationssystem ITS1 abgesendete Protokollelement REL wird vom anderen Test- und Simulationssystem ITS2 durch das Protokollelement RLC quittiert. Dieser Vorgang wird von der Koordinierungsprozedur CP gestartet und gesteuert. In der Praxis kann jedoch das Teilnehmerendgerät des angewählten B-Teilnehmers belegt, der Teilnehmer nicht anwesend oder gar die im Koppelfeld des Vermittlungssystems durchzuschaltende Verbindung überlastet sein. Diese Fälle müssen ebenfalls bei der Simulation des Verbindungsaufbaus mitberücksichtigt werden. Bei der Konzeption der Koordinierungsprozedur CP wurde diesem Umstand Rechnung getragen. Weiterhin kann von den Test- und Simulationsprozeduren die Funktion 'TERMINAL PORTABILITY' getestet und simuliert werden. Die Funktion 'TERMINAL PORTABILITY' bedeutet, daß ein Teilnehmer sein Endgerät von einer ersten Steckdose abzieht und innerhalb einer definierten Zeitspanne in eine zweite Steckdose einführt. Dieser Vorgang darf während dieser Zeitspanne die bestehende Verbindung zwischen den A-/B-Teilnehmern nicht unterbrechen. Zu diesem Zweck wird vom einen Test- und Simulationssystem ITS1 zwischen dem soeben beschriebenen Verbindungsaufbau und Verbindungsabbau ein Protokollelement SUS in Richtung des anderen Test- und Simulationssystem ITS1 gesendet, das dieses empfangene Protokollelement SUS mit einem Protokollelement RES quittiert. Dieser Vorgang wird ebenfalls von der Koordinierungsprozedur CP gestartet und entsprechend gesteuert.

An ein Vermittlungssystem werden besonders hohe Anforderungen bezüglich seiner Ausfallsicherheit gestellt. Daher muß insbesondere dafür Sorge getragen werden, daß das Vermittlungssystem stets fest definierte Zustände einnimmt. Besonders kritisch ist nun für ein Vermittlungssystem, wenn es von anderen Vermittlungssystemen ein Signalisierungsprotokoll erhält, dessen Protokollelemente durch die Übertragung verfälscht oder gar undefiniert sind. In diesem Fall droht die Gefahr eines Totalabsturzes des Vermittlungssystems; ein Zustand, der unter allen Umständen zu vermeiden ist.

Das Test- und Simulationssystem ITS gestattet es, die Reaktion eines Vermittlungssystems vor Inbetriebnahme auf das Vorkommen solcher fehlerhaften/undefinierten Zustände hin zu untersuchen. Die Koordinierungsprozedur CP steuert die entsprechenden Test- und Simulationsabläufe:
So kann beispielsweise die Reaktion des Vermittlungssystems auf einen gleichzeitigen Belegungsversuch hin untersucht werden. Ferner sind die Zustandsuntersuchungen möglich, wenn verschiedene Protokollelemente/Meldungen gleichzeitig eintreffen. Dies wäre beispielsweise dann der Fall, wenn A- und B-Teilnehmer gleichzeitig das Gespräch beenden und somit die damit verbundenen Protokollelemente gleichzeitig abgesendet werden. Ferner besteht die Gefahr, daß Meldungs/ Quittungsformate eintreffen, die für das Vermittlungssystem "unbekannt" sind und dementsprechend auch nicht ausgewertet werden können. Weiterhin gibt es Quittungsmeldungen, die nur in einem bestimmten Zeitschlitz im System eintreffen. Treffen diese Meldungen zu einem anderen Zeitpunkt ein, so kann dies unter Umständen zum Totalabsturz des Vermittlungssystems führen. Das Eintreffen solcher Meldungen wird von der Koordinierungsprozedur CP gezielt angereizt und die entsprechende Reaktion des Vermittlungssystems untersucht.

## Patentansprüche

1. Verfahren für Test und Simulation von aus mehreren Protokollelementen bestehenden Zwischenamtsignalisierungsprotokollen, das mit einer Test- und Simulationsanordnung (ITS), die
- an ein Vermittlungssystem (VS) über spezielle Anschlußadapter (AD) anschließbar ist, und
- mit einem Personal Computer (PC) ausgestattet ist, der Prozeduren des Betriebssystems (BS) sowie Prozeduren zum Erstellen neuer Prozeduren (SS) enthält,
**dadurch gekennzeichnet,**
daß die Protokollelemente durch Daten sowie Vorschriften für Adressen und Parameter beinhaltende Prozedurkomplexe realisiert sind, die von einer ablaufende Programme beinhaltenden zentralen Koordinierungsprozedur (CP) angesteuert werden, die somit einen Verbindungsaufbau zwischen einem A-Teilnehmer und einem B-Teilnehmer derart simuliert, indem eine erste zentrale Koordinierungsprozedur (CP) einer ersten, an das Vermittlungssystem (VS) angeschlossenen Test- und Simulationsanordnung (ITS1) mit einer zweiten zentralen Koordinierungsprozedur (CP) einer zweiten, an das Vermittlungssystem (VS) angeschlossenen Test- und Simulationsanordnung (ITS2) alle praxiskonformen Verbindungsvarianten praxisgerecht durch ein entsprechendes Meldungs-/Quittungsspiel simuliert, indem die erste zentrale Koordinierungsprozedur (CP) einzelne Protokollelemente zum Vermittlungssystem (VS) sendet, die die zweite zentrale Koordinierungsprozedur (CP) auswertet, und in Abhängigkeit vom Auswerteergebnis ihrerseits die entsprechenden Protokollelemente zur ersten zentralen Koordinierungsprozedur (CP) als Quittung zurücksendet.

2. Verfahren nach Anspruch 1,
**dadurch gekennzeichnet,**
daß eine Funktion 'TERMINAL PORTABILITY' derart simuliert wird, indem die erste und zweite zentrale Koordinierungsprozedur (CP) der ersten und zweiten Test- und Simulationsanordnung (ITS1, ITS2) zeitlich zwischen dem simulierten Verbindungsaufbau und -abbau ein Meldungs-/Quittungsspiel durchführt, und somit die Reaktion des Vermittlungssystems (VS) auf ein simuliertes Abziehen eines Teilnehmerendgerätes sowie ein erneutes Einstecken des Teilnehmerendgerätes in den Teilnehmeranschluß untersucht.

3. Verfahren nach Anspruch 1,
**dadurch gekennzeichnet,**
daß die Standfestigkeit des Vermittlungssystems (VS) untersucht wird, indem die erste und zweite zentrale Koordinierungsprozedur (CP) gezielt undefinierte und verfälschte Protokollelemente zum Vermittlungssystem (VS) senden und dessen Reaktion auf dieselben auswertet.
